# EUROPEAN PATENT APPLICATION

(11) **EP 4 379 877 A1**
(43) Date of publication of application: **05.06.2024**
(21) Application number: 22849608.9
(22) Date of filing: 29.07.2022
(51) Int. Cl.: H01M 8/18, H01M 8/02

(54) **AQUEOUS ELECTROLYTE, SALTS USED THEREIN, AND REDOX FLOW BATTERY USING SAID AQUEOUS ELECTROLYTE**

(30) Priority: 29.07.2021 JP 2021124569
(71) Applicant: Mitsubishi Chemical Corporation, Chiyoda-ku Tokyo 100-8251 (JP)
(72) Inventor: ARAMAKI, Hiroki, Tokyo 100-8251 (JP); OIZUMI, Junichi, Tokyo 100-8251 (JP)
(74) Representative: Vossius & Partner Patentanwälte Rechtsanwälte mbB
(86) International application number: PCT/JP2022/029247
(87) International publication number: WO 2023/008548

(57) **Abstract**

The present invention provides: [1] an aqueous electrolytic solution comprising at least one polycyclic organic compound salt selected from salts represented by general formulae (1) to (3), at least one selected from the group consisting of an alkali metal salt and an amine salt, and water, wherein the aqueous electrolytic solution has a pH of 6.5 to 12.5; and [2] a salt represented by the following general formula (4), an aqueous electrolytic solution comprising the salt, and a redox flow battery comprising the aqueous electrolytic solution, a positive electrode, a negative electrode, and a separator.

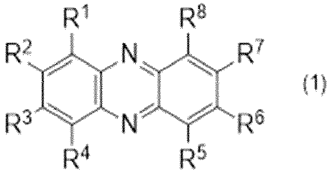

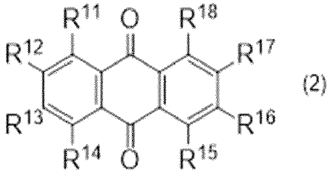

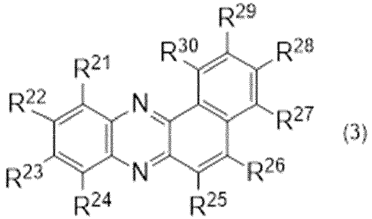

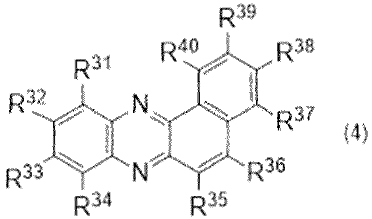

## Description

### Technical Field

The present invention relates to an aqueous electrolytic solution, a salt used therein, and a redox flow battery using the aqueous electrolytic solution.

### Background Art

In recent years, the use of renewable energy that does not generate greenhouse gases has been increasing to realize a sustainable society. However, the amount of electricity generated from renewable energy sources tends to be affected, for example, by the season and weather, and thus there is a need for rechargeable batteries for electric power storage to ensure a stable supply of renewable energy. Redox flow batteries are known as such industrial rechargeable batteries.

Although vanadium is currently used as an active material in an electrolytic solution for a conventional redox flow battery, there are concerns about insufficient supply and an increase in cost because vanadium is a rare metal. In addition, since a highly concentrated sulfuric acid is used as the electrolytic solution, the search for an active material to replace vanadium is ongoing.

For example, PTL 1 discloses a redox flow battery comprising a positive electrode electrolytic solution containing water and a first redox couple that contains a first organic compound having a specific structure and a reduction product of the first organic compound; and a negative electrode electrolytic solution containing water and a second redox couple that contains a second organic compound having a specific structure and a reduction product of the second organic compound.

PTL 2 discloses an aqueous electrolytic solution containing water and a phenazine derivative having a specific structure or a salt thereof.

PTL 3 discloses a redox flow battery electrolytic solution containing a phenazine-based compound having a specific structure and a solute.

PTL 4 discloses a redox flow battery comprising a cathode, an anode, a charge-carrying electrolyte, and a phenazine-based compound having a specific structure.

### Citation List

### Patent Literature

PTL 1: US 9,614,245 B2
PTL 2: US 10,454,124 B2
PTL 3: WO 2020/111725 A1
PTL 4: JP 2020-527843 A

### Summary of Invention

### Technical Problem

The electrolytic solutions of redox flow batteries described in PTLs 1 to 3 are, however, highly concentrated aqueous alkaline solutions, so there is a need for electrolytic solutions having a pH in a near-neutral range. Since the charge-carrying medium of the redox flow battery described in PTL 4 is flammable, there is also a need for an aqueous electrolytic solution that is flame-retardant.

The present invention has been made to solve the above problems, and a first object of the present invention is to provide an aqueous electrolytic solution having a pH in the near-neutral range, a salt used therein, and a redox flow battery using the aqueous electrolytic solution.

A second object of the present invention is to provide a novel compound salt, an aqueous electrolytic solution that is excellent in thermal stability using the salt, and a redox flow battery using the aqueous electrolytic solution.

### Solution to Problem

As a result of intensive studies in view of the above circumstances, the present inventors have found that the above-described objects can be achieved by using an aqueous electrolytic solution containing a compound derived from a specific polycyclic organic compound salt, at least one selected from the group consisting of an alkali metal salt and an amine salt, and water, thereby completing the present invention.

In other words, the gist of the present invention is as follows.
[1] An aqueous electrolytic solution comprising at least one polycyclic organic compound salt selected from salts represented by general formulae (1) to (3), at least one selected from the group consisting of an alkali metal salt and an amine salt, and water, wherein the aqueous electrolytic solution has a pH of 6.5 to 12.5: 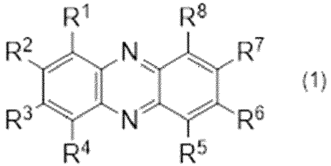
   wherein R¹ to R⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
   at least one of R¹ to R⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group; and
   two adjacent groups of R¹ to R⁸ may be bonded to each other to form a non-aromatic ring, and
   the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group, 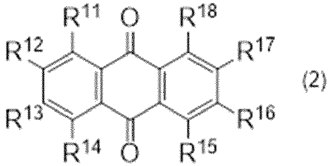
   wherein R¹¹ to R¹⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group;
   at least one of R¹¹ to R¹⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group; and
   the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group, and 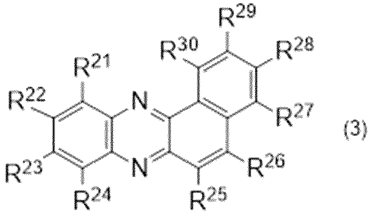
   wherein R²¹ to R³⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a phosphonic acid group, and a phosphoric acid group, or a salt thereof;
   at least one of R²¹ to R³⁰ represents a hydroxy group;
   at least one of R²¹ to R³⁰ represents a lithium salt, a sodium salt, a potassium salt, or an ammonium salt of a carboxy group or a carboxy group substituted with an alkyl group or an alkoxy group; and
   two adjacent groups of R²¹ to R³⁰ may be bonded to each other to form a ring, and
   the alkyl group, the aryl group, the alkoxy group, the acyloxy group, the alkoxycarbonyl group, and the acyl group may be substituted with a halogen atom, a hydroxy group, an alkoxy group, an amino group, and/or a carboxy group.
[2] A redox flow battery comprising an aqueous electrolytic solution, a positive electrode, a negative electrode, and a separator, wherein
   the aqueous electrolytic solution comprises the aqueous electrolytic solution according to [1].
[3] A salt represented by general formula (4): 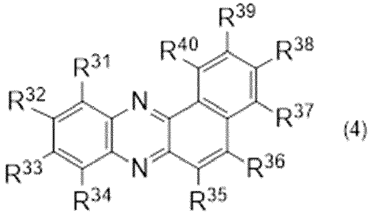
   wherein R³¹ to R⁴⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
   at least one of R³¹ to R⁴⁰ represents a hydroxy group;
   at least one of R³¹ to R⁴⁰ represents a lithium salt, a sodium salt, a potassium salt, or an ammonium salt of a sulfonic acid group, a sulfonic acid group substituted with an alkyl group or an alkoxy group, a sulfuric acid group, or a sulfuric acid group substituted with an alkyl group or an alkoxy group; and
   two adjacent groups of R³¹ to R⁴⁰ may be bonded to each other to form a ring, and
   the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group.
[4] An aqueous electrolytic solution comprising the salt according to [3].
[5] A redox flow battery comprising an aqueous electrolytic solution, a positive electrode, a negative electrode, and a separator,
   wherein the aqueous electrolytic solution comprises the aqueous electrolytic solution according to [4].

### Advantageous Effects of Invention

The present invention can provide (1) an aqueous electrolytic solution having a pH in a near-neutral range and a salt used therein; and (2) a novel compound salt, an aqueous electrolytic solution that is excellent in thermal stability using the salt, and a redox flow battery using the aqueous electrolytic solution.

### Brief Description of Drawings

[Fig. 1] Fig. 1 is a cyclic voltammogram of an electrolytic solution containing a potassium salt represented by formula (1-1).
[Fig. 2] Fig. 2 is a cyclic voltammogram of an electrolytic solution containing potassium salts represented by formulae (3-1) and (3-2).
[Fig. 3] Fig. 3 is a cyclic voltammogram of an electrolytic solution containing a potassium salt represented by formula (2-1).
[Fig. 4] Fig. 4 is a cyclic voltammogram of an electrolytic solution containing a salt represented by formula (2-2).
[Fig. 5] Fig. 5 shows results of charge and discharge experiments on a redox flow battery obtained in Example 5.
[Fig. 6] Fig. 6 shows results of charge and discharge experiments on a redox flow battery obtained in Example 6.
[Fig. 7] Fig. 7 is a cyclic voltammogram of an electrolytic solution containing potassium salts represented by formulae (4-1) and (4-2).
[Fig. 8] Fig. 8 is a cyclic voltammogram of an electrolytic solution containing potassium salts represented by formulae (4-3) and (4-4).
[Fig. 9] Fig. 9 is a cyclic voltammogram of an electrolytic solution containing potassium salts represented by formulae (4-3) and (4-4).
[Fig. 10] Fig. 10 shows results of charge and discharge experiments on a redox flow battery obtained in Example 11.

### Description of Embodiments

### <First Aspect>

An aspect of the present invention may be; an aqueous electrolytic solution containing a polycyclic organic compound salt, at least one selected from the group consisting of an alkali metal salt and an amine salt, and water, wherein the aqueous electrolytic solution has a pH of 6.5 to 12.5; a method for producing the same; and a redox flow battery using the aqueous electrolytic solution.

### [Aqueous electrolytic solution]

The aqueous electrolytic solution of the present invention can be used as an aqueous electrolytic solution for various batteries since it can drive batteries in the near-neutral pH range, and is particularly useful as an aqueous electrolytic solution for a redox flow battery.

### (Polycyclic organic compound salt)

The polycyclic organic compound salt contained in the aqueous electrolytic solution of the present invention is at least one salt represented by a formula selected from salts represented by the following general formulae (1) to (3). The salt represented by a formula selected from general formulae (1) to (3) will be described below.

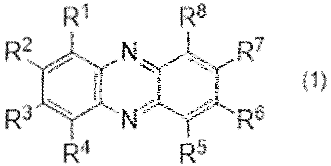

In general formula (1), R¹ to R⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
at least one of R¹ to R⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group.

In addition, two adjacent groups of R¹ to R⁸ may be bonded to each other to form a non-aromatic ring, and the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group,

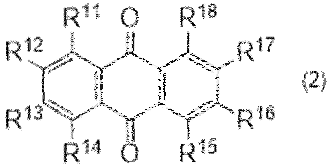

In general formula (2), R¹¹ to R¹⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group;
at least one of R¹¹ to R¹⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group.

In addition, the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group.

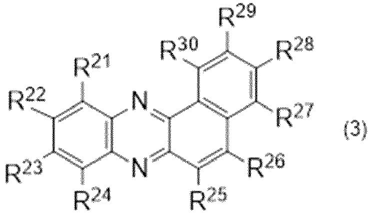

In general formula (3), R²¹ to R³⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, phosphonic acid group, and a phosphoric acid group, or a salt thereof;
at least one of R²¹ to R³⁰ represents a hydroxy group;
at least one of R²¹ to R³⁰ represents a lithium salt, a sodium salt, a potassium salt, or an ammonium salt of a carboxy group or a carboxy group substituted with an alkyl group or an alkoxy group.

In addition, two adjacent groups of R²¹ to R³⁰ may be bonded to each other to form a ring, and the alkyl group, the aryl group, the alkoxy group, the acyloxy group, the alkoxycarbonyl group, and the acyl group may be substituted with a halogen atom, a hydroxy group, an alkoxy group, an amino group, and/or a carboxy group.

The halogen atom of each of R¹ to R⁸ is preferably fluorine, chlorine, bromine, or iodine, more preferably fluorine or chlorine, and even more preferably fluorine.

In a preferred aspect, the halogen atom of each of R¹¹ to R¹⁸ is the same as that of R¹ to Rg.

In a preferred aspect, the halogen atom of each of R²¹ to R³⁰ is the same as that of R¹ to Rg.

The alkyl group of each of R¹ to R⁸ is preferably an alkyl group having 1 to 4 carbon atoms, more preferably a methyl group, an ethyl group, an n-propyl group, an isopropyl group, an n-butyl group, an s-butyl group, a t-butyl group, or an isobutyl group, and even more preferably a methyl group or an ethyl group.

In a preferred aspect, the alkyl group of each of R¹¹ to R¹⁸ is the same as that of R¹ to Rg.

In a preferred aspect, the alkyl group of each of R²¹ to R³⁰ is the same as that of R¹ to Rg.

The aryl group of each of R¹ to R⁸ is preferably an aryl group having 6 to 22 carbon atoms, more preferably a phenyl group or a naphthyl group, and even more preferably a phenyl group.

In a preferred aspect, the aryl group of each of R¹¹ to R¹⁸ is the same as that of R¹ to R⁸. In a preferred aspect, the aryl group of each of R²¹ to R³⁰ is the same as that of R¹ to R⁸. The alkoxy group of each of R¹ to R⁸ is preferably an alkoxy group having 1 to 10 carbon atoms, more preferably a methoxy group, an ethoxy group, an n-propoxy group, an isopropoxy group, an n-butoxy group, an s-butoxy group, a t-butoxy group, or an isobutoxy group, and even more preferably a methoxy group or an ethoxy group.

In a preferred aspect, the alkoxy group of each of R¹¹ to R¹⁸ is the same as that of R¹ to Rg.

In a preferred aspect, the alkoxy group of each of R²¹ to R³⁰ is the same as that of R¹ to Rg.

The acyloxy group of each of R¹ to R⁸ is preferably an acyloxy group having 1 to 10 carbon atoms, more preferably an acetyloxy group, an n-propanoyloxy group, an isopropanoyloxy group, an n-butanoyloxy group, an s-butanoyloxy group, a t-butanoyloxy group, or an isobutanoyloxy group, and even more preferably an acetyloxy group.

In a preferred aspect, the acyloxy group of each of R¹¹ to R¹⁸ is the same as that of R¹ to R⁸.

In a preferred aspect, the acyloxy group of each of R²¹ to R³⁰ is the same as that of R¹ to R⁸.

The alkoxycarbonyl group of each of R¹ to R⁸ is an ester of a carboxy group with an alcohol having 1 to 4 carbon atoms, preferably a methoxycarbonyl group, an ethoxycarbonyl group, an n-propoxycarbonyl group, an isopropoxycarbonyl group, an n-butoxycarbonyl group, an s-butoxycarbonyl group, a t-butoxycarbonyl group, or an isobutoxycarbonyl group, and more preferably a methoxycarbonyl group or an ethoxycarbonyl group.

In a preferred aspect, the alkoxycarbonyl group of each of R¹¹ to R¹⁸ is the same as that ofR¹ to R⁸.

In a preferred aspect, the alkoxycarbonyl group of each of R²¹ to R³⁰ is the same as that ofR¹ to R⁸.

The acyl group of each ofR¹ to R⁸ is preferably an acetyl group, an n-propanoyl group, an isopropanoyl group, an n-butanoyl group, an s-butanoyl group, a t-butanoyl group, or an isobutanoyl group, and more preferably an acetyl group.

In a preferred aspect, the acyl group of each of R¹¹ to R¹⁸ is the same as that ofR¹ to R⁸.

In a preferred aspect, the acyl group of each of R²¹ to R³⁰ is the same as that ofR¹ to R⁸.

The amide group of each ofR¹ to R⁸ is an amide of an amino group with a carboxylic acid having 1 to 4 carbon atoms, preferably a formamide group, an acetamide group, a propionamide group, a butyramide group, an isobutyramide group, or a succinimide group, and more preferably a formamide group or an acetamide group.

In a preferred aspect, the amide group of each of R¹¹ to R¹⁸ is the same as that ofR¹ to R⁸.

In a preferred aspect, the amide group of each of R²¹ to R³⁰ is the same as that ofR¹ to R⁸.

The amino group salt of each of R¹ to R⁸ is preferably an inorganic acid salt of the amino group and more preferably a hydrochloride salt of the amino group.

In a preferred aspect, the amino group of each of R¹¹ to R¹⁸ is the same as that ofR¹ to R⁸.

In a preferred aspect, the amino group of each of R²¹ to R³⁰ is the same as that ofR¹ to R⁸.

The hydroxy group, carboxy group, thiol group, phosphonic acid group, or phosphoric acid group salt of each ofR¹ to R⁸ is preferably an alkali metal salt, an alkaline earth metal salt, or an ammonium salt of these groups, and more preferably a lithium salt, a sodium salt, a potassium salt, or an ammonium salt of these groups.

In a preferred aspect, the hydroxy group, carboxy group, thiol group, phosphonic acid group, or phosphoric acid group salt of each of R¹¹ to R¹⁸ is the same as that ofR¹ to R⁸.

In a preferred aspect, the hydroxy group, carboxy group, thiol group, phosphonic acid group, or phosphoric acid group salt of each of R²¹ to R³⁰ is the same as that of R¹ to R⁸.

The sulfonic acid group or sulfuric acid group salt of each of R¹ to R⁸ is preferably an alkali metal salt, an alkaline earth metal salt, or an ammonium salt of these groups, and more preferably a lithium salt, a sodium salt, a potassium salt, or an ammonium salt of these groups.

In a preferred aspect, the sulfonic acid group or sulfuric acid group salt of each of R¹¹ to R¹⁸ is the same as that of R¹ to R⁸.

When two adjacent groups of R¹ to R⁸ are bonded to each other to form a non-aromatic ring, the formed ring is preferably a 5- or 6-membered non-aromatic ring, more preferably a cyclohexane ring, and even more preferably an unsubstituted cyclohexane ring.

When two adjacent groups of R²¹ to R³⁰ are bonded to each other to form a ring, the formed ring is preferably a 5- or 6-membered ring, more preferably a 5- or 6-membered aromatic ring, even more preferably a benzene ring, and still more preferably an unsubstituted benzene ring.

The salt represented by general formula (1) dissolves in water when at least one of R¹ to R⁸ is a lithium salt, a sodium salt, a potassium salt, or an ammonium salt of a sulfonic acid group, a sulfonic acid group substituted with an alkyl group or an alkoxy group, a carboxyl group, or a carboxy group substituted with an alkyl group or an alkoxy group (hereinafter also referred to as a "sulfonic acid group or carboxy group salt").

In addition, the salt represented by general formula (1) is preferable because the solubility in water is increased when at least one of R¹ to R⁸ is a lithium salt, a sodium salt, a potassium salt, or an ammonium salt of a hydroxy group (phenolic hydroxy group) (hereinafter also referred to as a "hydroxy group salt"). In the salt represented by general formula (1), when at least one of R⁵ to R⁸ is a hydroxy group salt, at least one of R¹ to R⁴ is preferably a sulfonic acid group or carboxy group salt.

Examples of the salt represented by general formula (1) include salts represented by formulae (1-1) to (1-9).

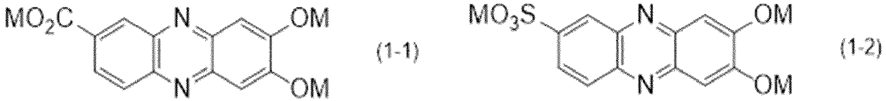

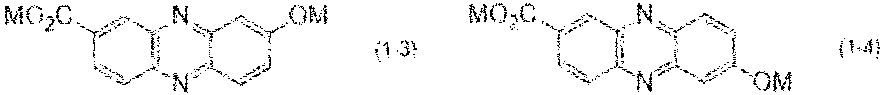

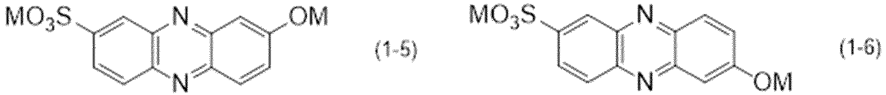

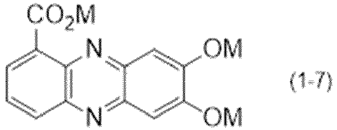

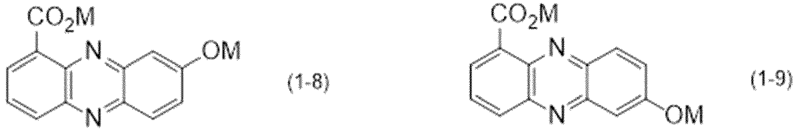

In formulae (1-1) to (1-9), M is each independently selected from the group consisting of a lithium atom, a potassium atom, a sodium atom, and ammonium.

The salt represented by general formula (2) is preferable because the solubility in water is increased when at least one of R¹¹ to R¹⁸ is a sulfonic acid group or carboxy group salt. In the salt represented by general formula (2), at least one of R¹¹ to R¹⁸ is preferably a sulfonic acid group salt.

The salt represented by general formula (2) is preferable because the solubility in water is increased when at least one of R¹¹ to R¹⁸ is a hydroxy group salt. Furthermore, when at least two of R¹¹ to R¹⁸ are hydroxy group salts, the salt represented by general formula (2) is more preferable because the solubility in water is further increased.

The salt represented by general formula (2) preferably include salts represented by formulae (2-1) to (2-7).

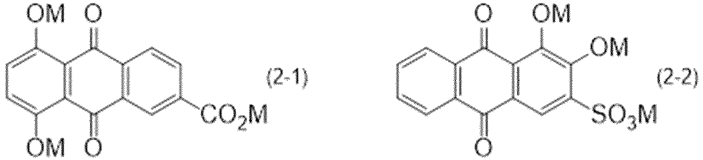

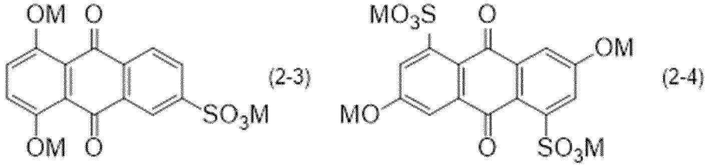

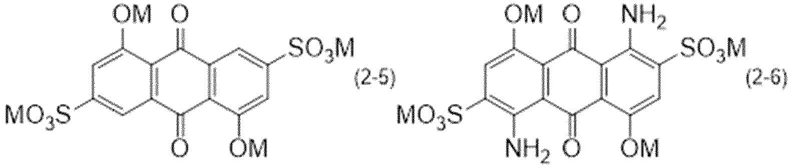

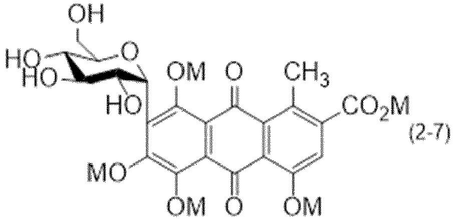

In formulae (2-1) to (2-7), M is each independently selected from the group consisting of a lithium atom, a potassium atom, a sodium atom, and ammonium.

The salt represented by general formula (3) dissolves in water because at least one of R²¹ to R³⁰ represents a lithium salt, a sodium salt, a potassium salt, or an ammonium salt of a carboxy group or a carboxy group substituted with an alkyl group or an alkoxy group (hereinafter also referred to as a "carboxy group salt").

In addition, the salt represented by general formula (3) is preferable because the solubility in water is increased when at least one of R²¹ to R³⁰ is a hydroxy group salt. In the salt represented by general formula (3), when at least one of R²⁵ to R³⁰ is a hydroxy group salt, at least one of R²¹ to R²⁴ is preferably a carboxy group salt.

Examples of the salt represented by general formula (3) include salts represented by formulae (3-1) to (3-4).

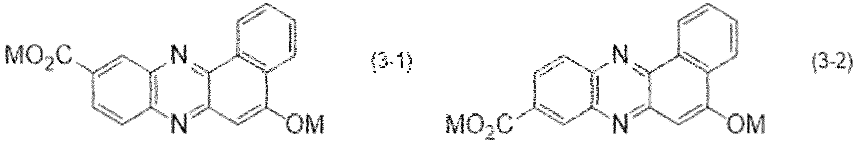

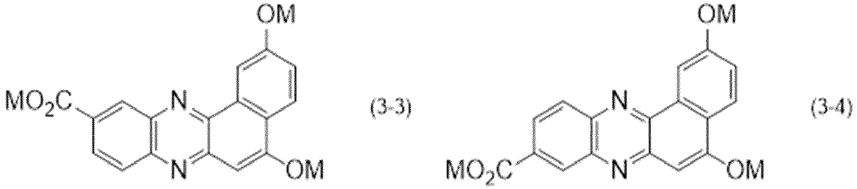

The aqueous electrolytic solution of the present invention may contain one or more compounds derived from the polycyclic organic compound salt described above.

The polycyclic organic compound salt may be synthesized by a known method, or a commercially available product may be used. Examples of the commercially available product include Alizarin Red S, carminic acid, and Solvent Blue 74.

### (Preparation of polycyclic organic compound salt)

Examples of a method of synthesizing the polycyclic organic compound includes a method of condensing a catechol derivative with an o-phenylenediamine derivative in the case of the salt represented by formula (1) and the salt represented by formula (3) to oxidize the resulting dihydrophenazine; and a method of providing a corresponding polycyclic organic compound by a Wohl-Aue reaction.

Examples of a method of synthesizing the salt represented by formula (2) include a method of condensing a benzene derivative and a phthalic anhydride derivative by a Friedel-Crafts reaction using a Lewis acid such as aluminum chloride; and a method of providing a corresponding polycyclic organic compound by a Diels-Alder reaction of a naphthoquinone derivative with a 1,3-diene compound.

A polycyclic organic compound salt can be prepared by reacting the thus obtained polycyclic organic compound with a cationic species as described later.

### (Alkali metal salt and amine salt)

The aqueous electrolytic solution of the present invention contains at least one selected from the group consisting of an alkali metal salt and an amine salt, which serve as a supporting electrolyte for enhancing conductivity, in addition to the polycyclic organic compound salt described above.

Examples of the alkali metal salt include an alkali metal halide; an alkali metal inorganic salt such as an alkali metal sulfate, an alkali metal nitrate, an alkali metal phosphate, and an alkali metal carbonate; and an alkali metal organic salt such as an alkali metal oxalate and an alkali metal citrate.

Examples of the amine salt include ammonium chloride and ammonium sulfate.

Of these, the alkali metal salt is preferably an alkali metal halide, more preferably an alkali metal chloride salt, even more preferably one selected from the group consisting of lithium chloride, sodium chloride, and potassium chloride, and still more preferably potassium chloride.

The concentrations of the alkali metal salt and the amine salt in the aqueous electrolytic solution are such that the total concentration of the salts is preferably 0.1 M or more, more preferably 0.5 M or more, and preferably 2 M or less and more preferably 1.5 M or less.

The concentrations of the alkali metal salt and the amine salt in the aqueous electrolytic solution are also such that the total concentration of the salts is preferably 0.1 M or more and 2 M or less, and more preferably 0.5 M or more and 1.5 M or less.

### (Water)

The water contained in the aqueous electrolytic solution of the present invention is preferably, but not particularly limited to, distilled water, ion-exchanged water, or ultrapure water, and more preferably ion-exchanged water from the viewpoint of cost.

The pH of the aqueous electrolytic solution is 6.5 or more, preferably 7 or more, and more preferably 8 or more, and 12.5 or less, preferably 11 or less, and more preferably 10.7 or less.

In addition, the pH of the aqueous electrolytic solution is 6.5 or more and 12.5 or less, preferably 7 or more and 11 or less, and more preferably 8 or more and 10.7 or less.

### [Method for producing aqueous electrolytic solution]

The method for producing the aqueous electrolytic solution includes dissolving a polycyclic organic compound salt, which is obtained by bringing at least one polycyclic organic compound selected from the group consisting of compounds represented by general formulae (1a) to (3a) into contact with one or more equivalents of a cationic species, and at least one selected from the group consisting of an alkali metal salt and an amine salt in a solvent containing water.

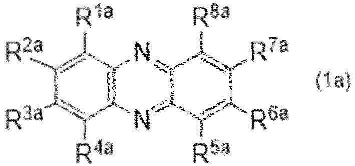

In general formula (1a), R^{1a} to R^{8a} are the same as R¹ to R⁸ in general formula (1), except that the sulfonic acid group salt and the carboxy group salt in the salt represented by general formula (1) are the corresponding sulfonic acid group and carboxy group, respectively.

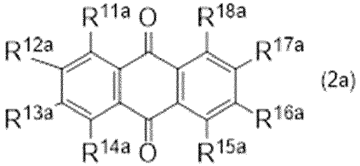

In general formula (2a), R^{11a} to R^{18a} are the same as R¹¹ to R¹⁸ in general formula (2), except that the sulfonic acid group salt and the carboxy group salt in the salt represented by general formula (2) are the corresponding sulfonic acid group and carboxy group, respectively.

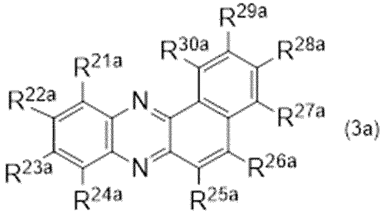

In general formula (3a), R^{21a} to R^{30a} are the same as R²¹ to R³⁰ in general formula (3), except that the carboxy group salt in the salt represented by general formula (3) is the corresponding carboxy group.

In addition, the compound represented by general formula (1a) is preferable because it easily dissolves in water upon contact with a cationic species when at least one of R^{1a} to R^{8a} is a hydroxy group.

Examples of the compounds represented by general formula (1a) include compounds represented by formulae (1a-1) to (1a-9).

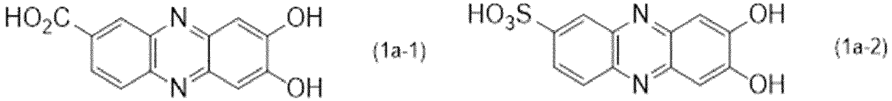

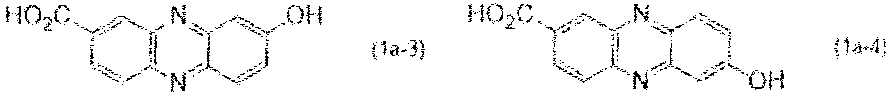

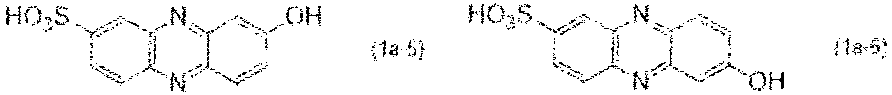

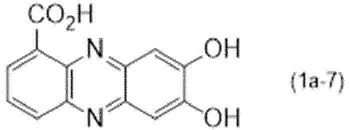

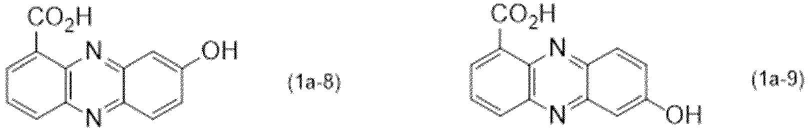

The compound represented by general formula (2a) is preferable because it easily dissolves in water upon contact with a cationic species when at least one of R^{11a} to R^{18a} is a hydroxy group. Furthermore, when at least two of R^{11a} to R^{18a} are hydroxy group salts, the compound represented by general formula (2a) is more preferable since it more easily dissolves in water upon addition of a cationic species.

Examples of the compounds represented by general formula (2a) include compounds represented by formulae (2a-1) to (2a-7).

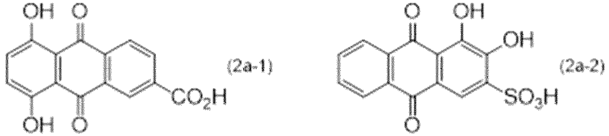

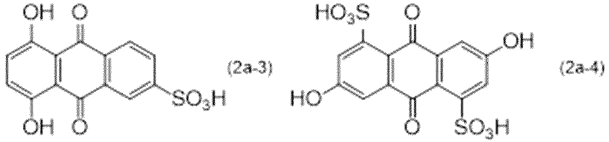

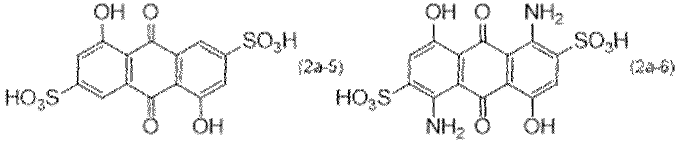

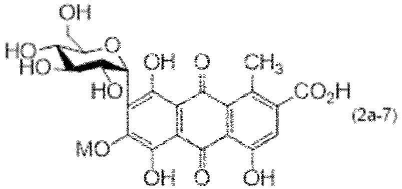

In addition, the compound represented by general formula (3a) is preferable since it easily dissolves in water upon contact with a cationic species when at least one of R^{21a} to R^{30a} is a hydroxy group.

Examples of the compounds represented by general formula (3a) include compounds represented by formulae (3a-1) to (3a-4).

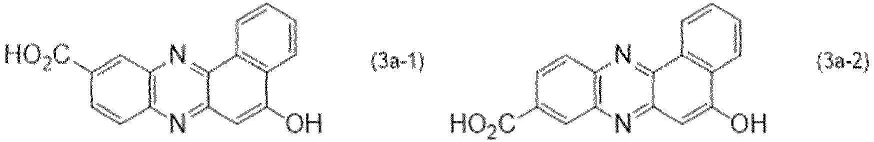

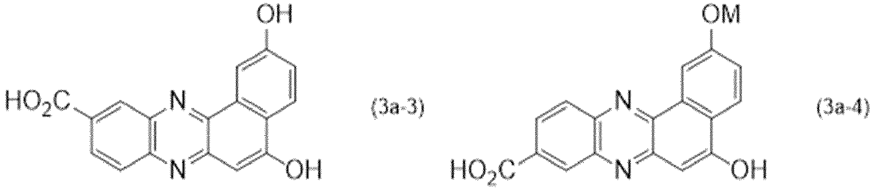

The cationic species to be brought into contact is not particularly limited as long as it is a cationic species capable of neutralizing the sulfonic acid group, the carboxy group, and the hydroxyl group (phenolic hydroxy group) of the polycyclic organic compound, and examples thereof include an alkali metal cation and ammonium. Examples of cation sources of the alkali metal include alkali metal hydroxides such as lithium hydroxide, sodium hydroxide, and potassium hydroxide; and alkali metal alkoxides such as lithium methoxide, lithium ethoxide, sodium methoxide, sodium ethoxide, potassium methoxide, and potassium ethoxide. The cationic species of the alkali metal may be used in solution, preferably in aqueous solution. Examples of cation sources of the ammonium include concentrated ammonia water (about 28%).

The polycyclic organic compound salt can be obtained by suspending the polycyclic organic compound in a solvent that does not dissolve the polycyclic organic compound, gradually adding a solution of the above cationic species dropwise, and distilling off the solvent after the polycyclic organic compound salt is completely dissolved in the solvent.

The cationic species may be added in an amount of one or more equivalents to the polycyclic organic compound, and is preferably brought into contact with the polycyclic organic compound such that the amount of the cation after the addition is equal to the total molar number of a sulfonic acid group, a carboxy group, and a phenolic hydroxy group in the polycyclic organic compound. In other words, when some of the sulfonic acid group, the carboxy group, and the phenolic hydroxy group contained in the polycyclic organic compound already become salts of the cationic species, the cationic species is preferably brought into contact with the polycyclic organic compound so that the total amount of the cationic species in the form of a salt and the cationic species added is equal to the total molar number of the sulfonic acid group, the carboxy group, and the phenolic hydroxy group in the polycyclic organic compound. Since the pH of the aqueous electrolytic solution increases if an excess of the cationic species is brought into contact, the amount of the cationic species to be added is preferably up to 1.3 times the total molar number of the sulfonic acid group, the carboxy group, and the phenolic hydroxy group in the polycyclic organic compound.

For example, methanol can be used as a solvent that does not dissolve the polycyclic organic compound. The solvent is used in an amount such that the molar concentration of the polycyclic organic compound salt after dissolving is preferably 0.001 M or more, more preferably 0.002 M or more, and preferably 0.3 M or less, and more preferably 0.25 M or less.

The temperature at which the cationic species is added dropwise to the suspension of the polycyclic organic compound is preferably 0°C or higher, more preferably 10°C or higher, and preferably 50°C or lower, more preferably 40°C or lower, even more preferably room temperature (25°C).

In the step of bringing one or more equivalents of cationic species into contact with at least one polycyclic organic compound selected from the group consisting of the compounds represented by general formulae (1a) to (3a) to give salts thereof, at least one polycyclic organic compound salt selected from the group consisting of salts represented by general formulae (1) to (3) may be used as it is.

The aqueous electrolytic solution of the present invention can be obtained by dissolving the obtained polycyclic organic compound salt and at least one selected from the group consisting of an alkali metal salt and an amine salt in a solvent containing water.

The alkali metal salt and the amine salt described above can be used as the alkali metal salt and the amine salt.

The solvent containing water is preferably substantially composed of water but may contain a trace amount of a solvent derived from a raw material. Examples of such a solvent include methanol.

The pH of the aqueous electrolytic solution is adjusted to 6.5 or more, preferably 7 or more, and more preferably 8 or more, and 12.5 or less, preferably 11 or less, and more preferably 10.7 or less. In addition, the pH of the aqueous electrolytic solution is adjusted to 6.5 or more and 12.5 or less, preferably 7 or more and 11 or less, and more preferably 8 or more and 10.7 or less. The pH of the aqueous electrolytic solution can be adjusted by the amounts and types of the alkali metal salt and amine salt to be used. For example, lithium hydrogen sulfate, sodium hydrogen sulfate, potassium hydrogen sulfate, lithium dihydrogen phosphate, sodium dihydrogen phosphate, potassium dihydrogen phosphate, and ammonium chloride, ammonium sulfate can be used to reduce the pH of the aqueous electrolytic solution (to the acidic/neutral side), while dilithium hydrogen phosphate, disodium hydrogen phosphate, dipotassium hydrogen phosphate, lithium carbonate, sodium carbonate, potassium carbonate, lithium bicarbonate, sodium bicarbonate, potassium bicarbonate, and organic acid salts of alkali metals can be used to increase the pH of the aqueous electrolytic solution (to the basic side).

As used herein, the composition of the aqueous electrolytic solution means a composition at the time of shipment of a battery into which the aqueous electrolytic solution is poured. However, it is not always necessary to analyze the composition of the aqueous electrolytic solution at the time of shipment, and the battery may be fabricated such that the composition at the time of shipment is within a desired range by measuring the content of the constituent components when producing the aqueous electrolytic solution or when pouring the non-aqueous electrolytic solution into the battery.

In other words, the aqueous electrolytic solution may be mixed such that the ratio of each constituent component has a pre-defined composition when preparing the aqueous electrolytic solution. In addition, after the aqueous electrolytic solution is prepared, the aqueous electrolytic solution itself can be subjected to analysis to confirm the composition. The aqueous electrolytic solution may also be recovered from a completed aqueous electrolytic solution secondary battery and used for analysis. Examples of a method of recovering the aqueous electrolytic solution include a method of opening a part or the whole of a battery container or making a hole in the battery container to collect the electrolytic solution. The opened battery container may be centrifuged to recover the electrolytic solution, or the electrolytic solution may be extracted by putting an extraction solvent (preferably, pure water, methanol, acetonitrile, etc.) into the opened battery container or bringing the extraction solvent into contact with a battery element thereof. The aqueous electrolytic solution recovered by such a method can be used for analysis. In addition, the recovered aqueous electrolytic solution may be diluted and used for analysis in order to obtain conditions suitable for analysis.

The compounds contained in the aqueous electrolytic solution are measured by nuclear magnetic resonance (hereinafter, sometimes abbreviated as NMR) analysis. In an inert atmosphere, the aqueous electrolytic solution is dissolved in a deuterated solvent and put into an NMR tube for an NMR measurement. A double tube may be used as the NMR tube, one of which may be charged with the aqueous electrolytic solution and the other of which may be charged with the deuterated solvent for the NMR measurement. Examples of the deuterated solvent include deuterated water, deuterated methanol, deuterated acetonitrile, and deuterated dimethyl sulfoxide. In determining concentrations of constituent components of the aqueous electrolytic solution, a specific amount of a standard substance is dissolved in the deuterated solvent, and a concentration of each constituent component can be calculated based on a spectral ratio. The concentration can be calculated based on a spectral ratio of a component with a known concentration to another component by determining concentrations of one or more components constituting the aqueous electrolytic solution in advance by another analytical technique, such as gas chromatography. A nuclear magnetic resonance spectrometer to be used preferably has a proton resonance frequency of 400 MHz or more. Examples of measurement nuclides include ¹H, ³¹P, ¹⁹F, and ¹¹B.

Since the compounds represented by the general formulae (1) to (3) are in a dissociated state in the aqueous electrolytic solution, it is sufficient that the anionic species can be detected. In the case of considering inorganic cationic species, however, the concentration is separately calculated by ICP atomic emission spectrometry, and the results are combined with those of NMR to determine the composition.

### <Second Aspect>

An aspect of the present invention is a salt represented by the following general formula (4).

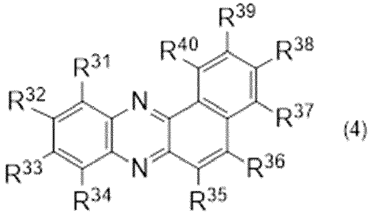

In general formula (4), R³¹ to R⁴⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
at least one of R³¹ to R⁴⁰ represents a hydroxy group;
at least one of R³¹ to R⁴⁰ represents a lithium salt, a sodium salt, a potassium salt, or an ammonium salt of a sulfonic acid group, a sulfonic acid group substituted with an alkyl group or an alkoxy group, a sulfuric acid group, or a sulfuric acid group substituted with an alkyl group or an alkoxy group.

In addition, two adjacent groups of R³¹ to R⁴⁰ may be bonded to each other to form a ring, and
the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group.

The halogen atom, the alkyl group, the aryl group, the alkoxy groups, the acyloxy group, the alkoxycarbonyl group, the acyl group, or the amide group of each of R³¹ to R⁴⁰ is the same as each group listed as R¹ to R⁸, R¹¹ to R¹⁸, and R²¹ to R³⁰.

The salt represented by general formula (4) dissolves in water because at least one of R³¹ to R⁴⁰ represents a lithium salt, a sodium salt, a potassium salt, or an ammonium salt of a sulfonic acid group or a sulfonic acid group substituted with an alkyl group or an alkoxy group (hereinafter also referred to as a "sulfonic acid group salt").

In addition, the salt represented by general formula (4) is preferable because the solubility in water is increased when at least one of R³¹ to R⁴⁰ is a hydroxy group salt. In the salt represented by general formula (4), at least one of R³¹ to R³⁴ is preferably a sulfonic acid group salt when at least one of R³⁵ to R⁴⁰ is a hydroxy group salt.

Examples of the salt represented by general formula (4) include compounds represented by formulae (4-1) to (4-6).

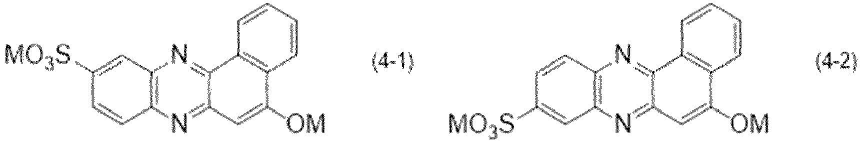

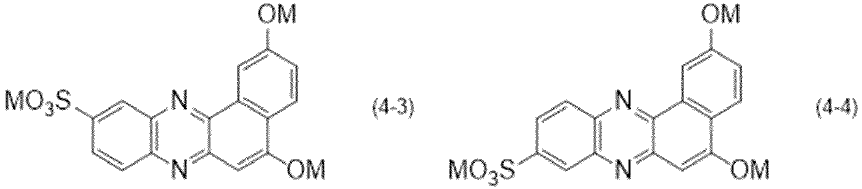

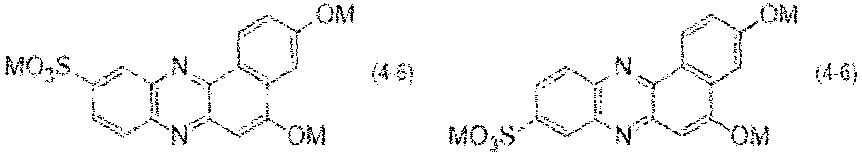

The salt represented by the general formula (4) is a compound in which the lithium salt, the sodium salt, the potassium salt, or the ammonium salt of the carboxy group or the carboxy group substituted with an alkyl group or an alkoxy group of the salt represented by the general formula (3) is replaced with a lithium salt, a sodium salt, a potassium salt, or an ammonium salt of a sulfonic acid group, a sulfonic acid group substituted with an alkyl group or an alkoxy group, a sulfuric acid group, or a sulfuric acid group substituted with an alkyl group or an alkoxy group.

When the carboxy group is replaced with a sulfonic acid group or a sulfuric acid group, the salt represented by general formula (4) more easily dissolves in water than the salt represented by general formula (3). Therefore, when the salt represented by the general formula (4) is used in the aqueous electrolytic solution, the pH of the aqueous electrolytic solution is adjusted to preferably 6.5 or more, more preferably 7 or more, even more preferably 8 or more, and preferably 14 or less, more preferably 12.5 or less, even more preferably 11 or less, and still more preferably 10.7 or less. In addition, the pH is adjusted to preferably 6.5 or more and 14 or less, more preferably 6.5 or more and 12.5 or less, even more preferably 7 or more and 11 or less, and still more preferably 8 or more and 10.7 or less.

The present inventors have revealed that an aqueous electrolytic solution containing the salt represented by general formula (4) is excellent in thermal stability as compared with a conventional aqueous electrolytic solution.

### (Preparation of salt represented by general formula (4))

The method of synthesizing the salt represented by general formula (4) includes, for example, reacting a polycyclic organic compound corresponding to the salt represented by general formula (4), which is obtained in the same manner as the salt represented by general formula (1) and the salt represented by general formula (3), with a cationic species to prepare the intended salt.

The alkali metal salt and the amine salt used for the preparation of the salts represented by formulae (1) to (3) can be used as the cationic species.

### [Method for producing aqueous electrolytic solution containing salt represented by general formula (4)]

The method for producing the aqueous electrolytic solution includes dissolving a polycyclic organic compound salt, which is obtained by bringing at least one polycyclic organic compound selected from the compounds represented by general formula (4a) into contact with one or more equivalents of a cationic species, and at least one selected from the group consisting of an alkali metal salt and an amine salt in a solvent containing water.

In other words, the aqueous electrolytic solution containing a salt represented by general formula (4) can be produced using the same materials and methods as in [Method for producing aqueous electrolytic solution] above, except that a compound represented by general formula (4a) below is used in place of at least one polycyclic organic compound selected from the group consisting of the compounds represented by general formulae (1a) to (3a) above.

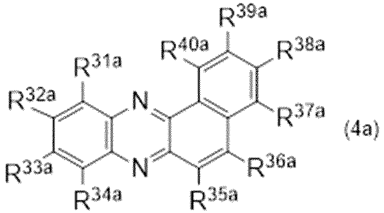

In general formula (4a), R^{31a} to R^{40a} are the same as R³¹ to R⁴⁰ in general formula (4), except that the sulfonic acid group salt and the sulfuric acid group salt in the salt represented by general formula (4) are the corresponding sulfonic acid group and sulfuric acid group, respectively.

In addition, the compound represented by general formula (4a) is preferable since it easily dissolves in water upon contact with a cationic species when at least one of R^{31a} to R^{40a} is a hydroxy group.

Examples of the compounds represented by general formula (4a) include compounds represented by formulae (4a-1) to (4a-6).

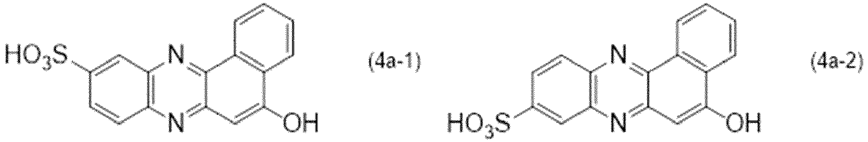

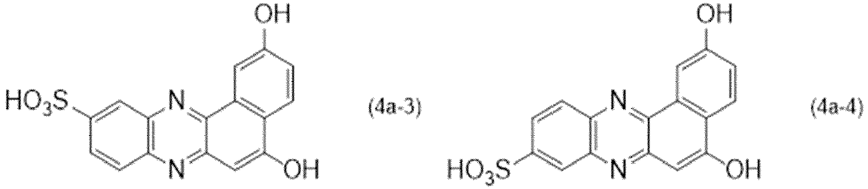

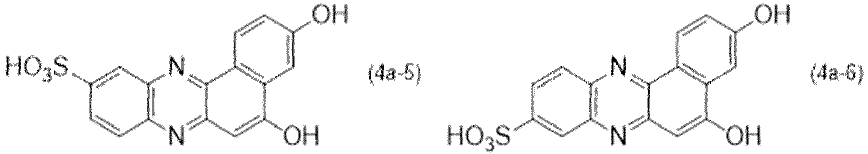

The compounds contained in the aqueous electrolytic solution are measured by nuclear magnetic resonance (hereinafter, sometimes abbreviated as NMR) analysis. In an inert atmosphere, the aqueous electrolytic solution is dissolved in a deuterated solvent and put into an NMR tube for an NMR measurement. A double tube may be used as the NMR tube, one of which may be charged with the aqueous electrolytic solution and the other of which may be charged with the deuterated solvent for the NMR measurement. Examples of the deuterated solvent include deuterated water, deuterated methanol, deuterated acetonitrile, and deuterated dimethyl sulfoxide. In determining concentrations of constituent components of the aqueous electrolytic solution, a specific amount of a standard substance is dissolved in the deuterated solvent, and a concentration of each constituent component can be calculated based on a spectral ratio. The concentration can be calculated based on a spectral ratio of a component with a known concentration to another component by determining concentrations of one or more components constituting the aqueous electrolytic solution in advance by another analytical technique, such as gas chromatography. A nuclear magnetic resonance spectrometer to be used preferably has a proton resonance frequency of 400 MHz or more. Examples of measurement nuclides include ¹H, ³¹P, ¹⁹F, and ¹¹B.

Since the compound represented by the general formula (4) is in a dissociated state in the aqueous electrolytic solution, it is sufficient that the anionic species can be detected. In the case of considering inorganic cationic species, however, the concentration is separately calculated by ICP atomic emission spectrometry, and the results are combined with those of NMR to determine the composition.

### [Redox flow battery]

The redox flow battery according to an embodiment of the present invention has a positive electrode circulation mechanism and a negative electrode circulation mechanism for circulating an aqueous electrolytic solution, and a battery cell. The battery cell is charged and discharged by circulating the aqueous electrolytic solution to promote an oxidation-reduction reaction. The battery cell includes a positive electrode chamber that houses a positive electrode, a negative electrode chamber that houses a negative electrode, and a separator that separates the positive electrode chamber and the negative electrode chamber. The positive electrode electrolytic solution and the negative electrode electrolytic solution, which are supplied by the positive electrode circulation mechanism and the negative electrode circulation mechanism, respectively, can be circulated in the positive electrode chamber and the negative electrode chamber. The redox flow battery of the present embodiment contains the aqueous electrolytic solution of the present invention as the negative electrode electrolytic solution.

### (Aqueous electrolytic solution)

The aqueous electrolytic solution contains a positive electrode electrolytic solution and a negative electrode electrolytic solution.

### (Positive electrode electrolytic solution)

Similar to the negative electrode electrolytic solution, an aqueous electrolytic solution is used as the positive electrode electrolytic solution. The positive electrode electrolytic solution contains the same supporting electrolyte as the supporting electrolyte contained in the aqueous electrolytic solution of the present invention as the negative electrode electrolytic solution.

Although an active material normally used in a redox flow battery can be used as the active material contained in the positive electrode electrolytic solution (positive electrode active material), an active material in which the difference in redox potential between the active material contained in the positive electrode electrolytic solution and the polycyclic organic compound salt contained in the negative electrode electrolytic solution as the active material is preferably 1.0 V or more, more preferably 1.1 V or more, and even more preferably 1.2 V or more. By using such active materials, the electromotive force of the redox flow battery can be enhanced. Examples of the positive electrode active material having a redox potential difference of 1.0 V or more with the polycyclic organic compound salt include a compound having a nitroxyl radical structure, a ferrocyanide, a compound having a ferrocene structure, a quinone compound, a bromine ion, and an iodine ion, and at least one compound selected from the group consisting of a compound having a nitroxyl radical structure, a ferrocyanide, and a compound having a ferrocene structure is preferred. Examples of the compound having a nitroxyl radical structure include 4-hydroxy-2,2,6,6-tetramethylpiperidine-1-oxyl (4-hydroxy-TEMPO), 2,2,6,6-tetramethylpiperidine-1-oxyl (TEMPO), 1-methyl-azaadamantane-N-oxyl (1-methyl-AZADO), and azaadamantane-N-oxyl (AZADO); examples of the ferrocyanide include potassium ferrocyanide and sodium ferrocyanide; and examples of the compound having a ferrocene structure include (ferrocenylmethyl)trimethylammoniumchloride, 1,1'-bis[3-(trimethylammonio)propyl]ferrocenedichloride, ferrocene-1,1'-dicarboxylic acid, ferrocenecarboxylic acid, ferrocenesulfonic acid, ferrocene-1,1'-disulfonic acid, ferroceneacetic acid, and ferrocenylmethanol.

Among these, in the aqueous electrolytic solution of the first aspect, at least one compound selected from the group consisting of a compound having a nitroxyl radical structure and a compound having a ferrocene structure is more preferable, and a compound having a nitroxyl radical structure is even more preferable from the viewpoint of providing a redox flow battery with a large electromotive force. In the aqueous electrolytic solution of the second aspect, from the viewpoint of the aqueous electrolytic solution capable of driving a battery in a wide pH range, at least one compound selected from the group consisting of a compound having a nitroxyl radical structure, a ferrocyanide, and a compound having a ferrocene structure is preferable; sodium ferrocyanide, (ferrocenylmethyl)trimethylammonium chloride, and 4-hydroxy-2,2,6,6-tetramethylpiperidine-1-oxyl are more preferable; and sodium ferrocyanide is even more preferable.

### (Positive electrode and negative electrode)

As the positive electrode and the negative electrode, electron conductors having a large specific surface area can be used, and examples thereof include a porous metal, carbon felt, carbon paper, and carbon nanotube sheet. A positive electrode terminal is connected to the positive electrode, a negative electrode terminal is connected to the negative electrode, and the positive electrode terminal and the negative electrode terminal are connected to the charge-discharge equipment. The charge-discharge equipment applies voltage to the positive electrode and the negative electrode during charging of the battery cell and extracts electric power from the battery cell via the positive electrode and the negative electrode during discharging.

### (Separator)

As the separator, a porous membrane can be used, and examples thereof include an anion exchange membrane, a cation exchange membrane, a porous membrane of polypropylene, a porous membrane of polyethylene, a nonwoven fabric separator of aromatic polyamide, and a nonwoven fabric separator of cellulose. Of these, in the case of using an anion such as a chloride ion, a bromide ion, an iodide ion, or a sulfate ion for charge compensation, an anion exchange membrane is preferable; and in the case of using a cation such as a sodium ion, a potassium ion, a lithium ion, or an ammonium ion for charge compensation, a cation exchange membrane is preferable, and an anion exchange membrane is more preferable.

### (Positive electrode circulation mechanism and negative electrode circulation mechanism)

The positive electrode circulation mechanism has a positive electrode tank, a positive electrode pump, and a positive electrode pipe, and causes the positive electrode electrolytic solution stored in the positive electrode tank to flow into the positive electrode chamber of the battery cell through the positive electrode pipe by the function of the positive electrode pump. The positive electrode electrolytic solution that is charged and discharged in the battery cell flows out of the positive electrode chamber and returns to the positive electrode tank. A positive electrode filter may be installed in an outflow portion of the positive electrode tank or between the positive electrode tank and the battery cell to limit the outflow of the positive electrode active material. The positive electrode filter can prevent the positive electrode active material from flowing into the battery cell, thereby preventing the battery cell from being failed or deteriorated due to mixing of the positive electrode active material and the negative electrode active material. The positive electrode pump may be installed at any position of the positive electrode circulation mechanism and is preferably between the positive electrode tank and the battery cell.

The negative electrode circulation mechanism has a negative electrode tank, a negative electrode pump, a negative electrode pipe, and an optional negative electrode filter. These arrangements and functions are similar to those of the corresponding parts of the positive circulation mechanism.

### Examples

Hereinafter, the present invention will be described in more detail with reference to Examples and Comparative Examples, but the present invention is not limited to these Examples.

### [First Aspect]

### <Synthesis of polycyclic organic compound and salt thereof>

### Synthesis Example 1 (Synthesis of compound represented by formula (1a-1) and salt represented by formula (1-1))

To a glass vessel equipped with a stirrer, 5.72 g (40 mmol) of 2,5-dihydroxy-1,4-benzoquinone, 6.21 g (40 mmol) of 3,4-diaminobenzoic acid, and 180 mL of water were added, heated for 2 hours, and reacted at reflux. The reaction mixture was cooled to room temperature and then filtered under reduced pressure to give a red-brown wet cake. The wet cake was dried to yield 10.3 g of a red brown powder.

The red brown powder was dissolved in a D₂O solvent to which one drop of 1 M sodium hydroxide aqueous solution was added, and ¹H-NMR was measured to confirm that the powder was a compound represented by formula (1a-1) (yield: 100%).

Next, 1 g (3.09 mmol) of the compound represented by formula (1a-1) prepared above was suspended in 15 mL of methanol. A 1 M potassium hydroxide solution was added in a volume of 11.71 mL with stirring at room temperature and the mixture was stirred until the compound represented by formula (1a-1) was completely dissolved. Thereafter, the solution was concentrated and dried to give a compound represented by formula (1-1) (wherein M represents a potassium atom; hereinafter also referred to as a "potassium salt represented by formula (1-1)") as a polycyclic organic compound salt.

When 0.05 mmol of the potassium salt represented by formula (1-1) was added to 10 mL each of 1 M sodium chloride aqueous solution, 1 M potassium chloride aqueous solution, 1 M lithium chloride aqueous solution, and 1 M ammonium chloride aqueous solution at room temperature, the potassium salt represented by formula (1-1) was completely dissolved in all the aqueous solutions.

On the other hand, 0.05 mmol of the compound represented by formula (1a-1) did not dissolve in any 10 mL of 1 M sodium chloride aqueous solution, 1 M potassium chloride aqueous solution, 1 M lithium chloride aqueous solution, and 1 M ammonium chloride aqueous solution.

When the pH of the solution of the potassium salt represented by formula (1-1) was measured in the same manner as in Synthesis Example 1, the pH of the solution was 9.8.

### Synthesis Example 2 (Synthesis of compounds represented by formulae (3a-1) and (3a-2) and salts represented by formulae (3-1) and (3-2))

To a glass vessel equipped with a stirrer, 4.44 g (25 mmol) of 2-hydroxy-1,4-naphthoquinone, 3.88 g (25 mmol) of 3,4-diaminobenzoic acid, and 250 mL of water were added, heated for 2 hours, and reacted at reflux. The reaction mixture was cooled to room temperature and then filtered under reduced pressure to give a red-brown wet cake. The wet cake was dried to yield 7.18 g of a red brown powder.

The red brown powder was dissolved in a D₂O solvent to which one drop of 1 M sodium hydroxide aqueous solution was added, and ¹H-NMR was measured to confirm that the powder was a mixture of compounds represented by formulae (3a-1) and (3a-2) (yield: 98.9%).

Next, 1 g (3.44 mmol) of the mixture of compounds represented by formulae (3a-1) and (3a-2) prepared above was suspended in 24 mL of methanol. A 1 M potassium hydroxide solution was added in a volume of 6.89 mL with stirring at room temperature, and the mixture was stirred until the compounds represented by formulae (3a-1) and (3a-2) were completely dissolved. Thereafter, the solution was concentrated and dried to give a mixture of compounds represented by formulae (3-1) and (3-2) (wherein M represents a potassium atom; hereinafter also referred to as "potassium salts represented by formulae (3-1) and (3-2)") as a polycyclic organic compound salt.

When 0.05 mmol of the mixture of the potassium salts represented by formulae (3-1) and (3-2) was added to 10 mL each of 1 M sodium chloride aqueous solution, 1 M potassium chloride aqueous solution, 1 M lithium chloride aqueous solution, and 1 M ammonium chloride aqueous solution at room temperature, the potassium salts represented by formulae (3-1) and (3-2) were completely dissolved in all the aqueous solutions.

On the other hand, 0.05 mmol of the mixture of the compounds represented by formulae (3a-1) and (3a-2) did not dissolve in any 10 mL of 1 M sodium chloride aqueous solution, 1 M potassium chloride aqueous solution, 1 M lithium chloride aqueous solution, and 1 M ammonium chloride aqueous solution.

The potassium salts represented by formulae (3-1) and (3-2) were dissolved in 1 M potassium chloride solution to a concentration of 0.005 M. When the resulting solution was measured with a pH meter (Twin pH Meter II LAQUAtwin, manufactured by HORIBA, Ltd., model No. AS-pH-11), the pH of the solution was 9.4.

### Synthesis Example 3 (Synthesis of compound represented by formula (2a-1) and salt thereof)

A compound represented by formula (2a-1) was synthesized according to the method described in JP 2008-63226 A.

Next, 0.1 g (0.352 mmol) of the compound represented by formula (2a-1) prepared above was suspended in 100 mL of methanol. A 1 M potassium hydroxide solution was added in a volume of 1.06 mL with stirring at room temperature and the mixture was stirred until the compound represented by formula (2a-1) was completely dissolved. Thereafter, the solution was concentrated and dried to give a compound represented by formula (2-1) (wherein M represents a potassium atom; hereinafter also referred to as a "potassium salt represented by formula (2-1)") as a polycyclic organic compound salt.

When 0.01 mmol of the potassium salt represented by formula (2-1) was added to 10 mL each of 1 M sodium chloride aqueous solution, 1 M potassium chloride aqueous solution, 1 M lithium chloride aqueous solution, and 1 M ammonium chloride aqueous solution at room temperature, the potassium salt represented by formula (2-1) was completely dissolved in all the aqueous solutions.

On the other hand, 0.01 mmol of the compound represented by formula (2a-1) did not dissolve in any 10 mL of 1 M sodium chloride aqueous solution, 1 M potassium chloride aqueous solution, 1 M lithium chloride aqueous solution, and 1 M ammonium chloride aqueous solution.

The pH of the solution was measured in the same manner as in Synthesis Example 1, except that the concentration of the potassium salt represented by formula (2-1) in the solution was 0.001 M. The pH of the solution was 10.6.

### Synthesis Example 4 (Synthesis of salt represented by formula (2-2))

First, 0.1 g (0.292 mmol) of Alizarin Red S (manufactured by FUJIFILM Wako Pure Chemical Corporation, Catalog No. 011-01192) was suspended in 100 mL of methanol. A 1 M potassium hydroxide solution was added in a volume of 0.584 mL with stirring at room temperature, and the mixture was stirred until the Alizarin Red S was completely dissolved. Thereafter, the solution was concentrated and dried to give a compound represented by formula (2-2) (wherein M represents sodium atom and potassium atom (sodium atom:potassium atom = 1:2 (molar ratio); hereinafter also referred to as a "salt represented by formula (2-2)") as a polycyclic organic compound salt.

When 0.01 mmol of the salt represented by formula (2-2) was added to 10 mL each of 1 M sodium chloride aqueous solution, 1 M potassium chloride aqueous solution, 1 M lithium chloride aqueous solution, and 1 M ammonium chloride aqueous solution at room temperature, the salt represented by formula (2-2) was completely dissolved in all the aqueous solutions.

On the other hand, 0.01 mmol of Alizarin Red S did not dissolve in any 10 mL of 1 M sodium chloride aqueous solution, 1 M potassium chloride aqueous solution, 1 M lithium chloride aqueous solution, and 1 M ammonium chloride aqueous solution.

The pH of the solution was measured in the same manner as in Synthesis Example 1, except that the concentration of the salt represented by formula (2-2) in the solution was 0.001 M. The pH of the solution was 10.1.

### <Electrochemical measurement of polycyclic organic compound salt>

### (Example 1)

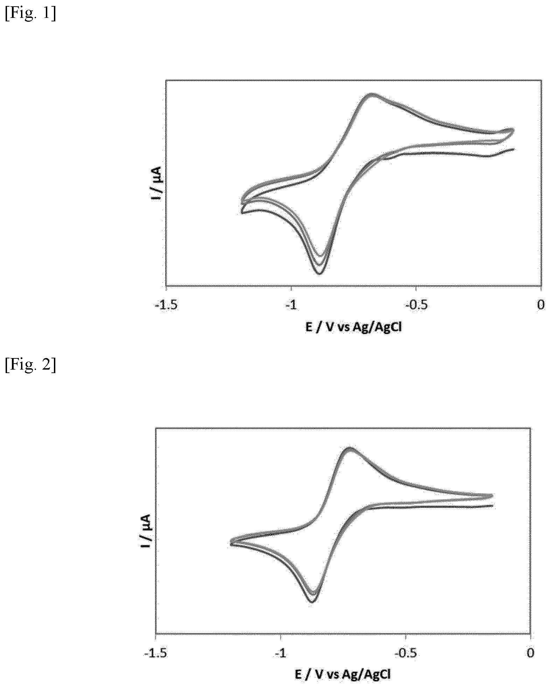

The potassium salt represented by formula (1-1) was dissolved in 1 M potassium chloride solution so that the concentration was 0.05 M to prepare an electrolytic solution. The solution was subjected to cyclic voltammetry measurements at a scanning rate of 50 mV/s using a carbon electrode (glassy carbon disk electrode, electrode area of 0.28 cm², manufactured by BAS Inc., model No. 002012) as a working electrode and a silver-silver chloride electrode (Ag/AgCl (saturated KCl, manufactured by BAS Inc., model No. RE-1CP) as a reference electrode, and a platinum wire (φ 0.5) as a counter electrode. The resulting cyclic voltammogram is shown in Fig. 1.

The redox potential differences with 4-hydroxy-TEMPO and (ferrocenylmethyl)trimethylammonium chloride (FcNCl) measured under the same conditions were 1.44 V and 1.27 V, respectively.

### (Example 2)

Cyclic voltammetry measurements were performed in the same manner as in Example 1, except that the potassium salt represented by formula (1-1) was changed to potassium salts represented by formulae (3-1) and (3-2). The resulting cyclic voltammogram is shown in Fig. 2.

The redox potential differences with 4-hydroxy-TEMPO and FcNCl measured under the same conditions were 1.38 V and 1.21 V, respectively.

### (Example 3)

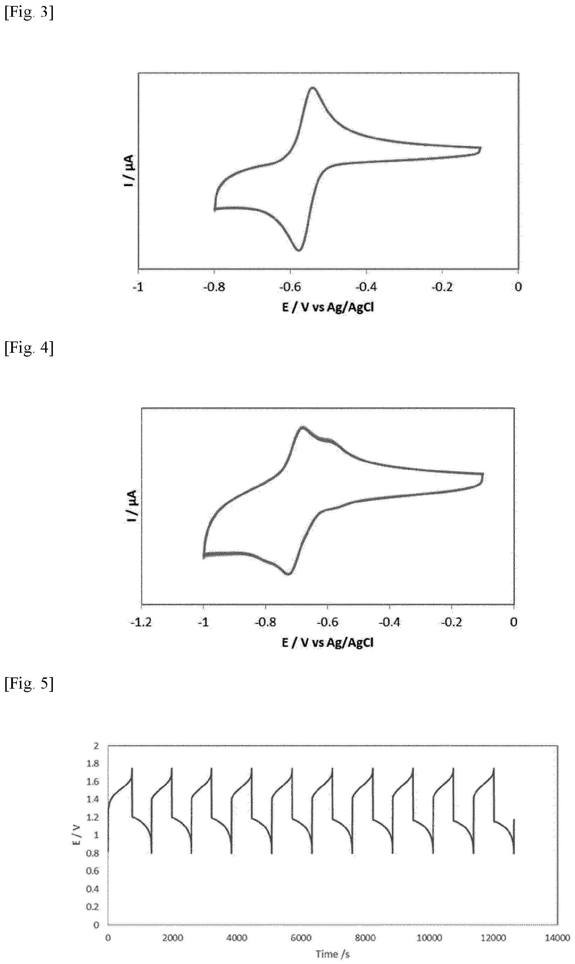

Cyclic voltammetry measurements were performed in the same manner as in Example 1, except that the potassium salt represented by formula (1-1) was changed to the potassium salt represented by formula (2-1). The resulting cyclic voltammogram is shown in Fig. 3.

The redox potential difference with 4-hydroxy-TEMPO measured under the same conditions was 1.14 V.

### (Example 4)

Cyclic voltammetry measurements were performed in the same manner as in Example 1, except that the potassium salt represented by formula (1-1) was changed to the potassium salt represented by formula (2-2). The resulting cyclic voltammogram is shown in Fig. 4.

The redox potential differences with 4-hydroxy-TEMPO and FcNCl measured under the same conditions were 1.32 V and 1.15 V, respectively.

The results of Examples 1 to 4 (Figs. 1 to 4) indicate that a redox flow battery with the aqueous electrolytic solution of the present invention used as the negative electrode electrolytic solution and an aqueous solution of sodium ferrocyanide, 4-hydroxy-TEMPO, or FcNCl used as the positive electrode electrolytic solution has sufficient electromotive forces.

### [Fabrication of redox flow battery]

A minicell (manufactured by Tsukuba Materials Information Laboratory, Ltd., model No. n-1) was partitioned by an anion exchange membrane (7 cm × 2 cm in size and 0.1 mm in thickness) as a separator to provide a positive electrode chamber and a negative electrode chamber, and carbon felt electrodes (about 3 mm in thickness and 5 cm × 1 cm in size) were arranged as a positive electrode and a negative electrode in the positive electrode chamber and the negative electrode chamber, respectively, to fabricate a battery cell. A redox flow battery was produced in which a positive electrode circulation mechanism having a positive electrode tank with a capacity of 13.5 mL, a tube as a positive electrode pipe connecting the positive electrode tank and the positive electrode chamber, and a positive electrode pump, and a negative electrode circulation mechanism having the same configuration as the positive electrode circulation mechanism were arranged outside the battery cell, and the positive electrode electrolytic solution and the negative electrode electrolytic solution were each circulated at a pump flow rate of 10 mL/min.

### <Charge and discharge experiment>

### (Example 5)

A mixture of the potassium salts represented by formulae (3-1) and (3-2) was dissolved in 1 M potassium chloride aqueous solution so that the concentration was 0.1 M to prepare a negative electrode electrolytic solution. In addition, FcNCl was dissolved in 1 M potassium chloride aqueous solution so that the concentration of the FcNCl was 0.3 M to prepare a positive electrode electrolytic solution. Each 10 mL of the negative electrode electrolytic solution and the positive electrode electrolytic solution was used as the electrolytic solution of the redox flow battery produced above, terminals of the positive electrode and the negative electrode were each connected to an external power supply equipment (HZ-Pro, manufactured by Hokuto Denko Corporation), the current density was set to 50 mA/cm², the rest time of 5 seconds was set between each step of charging and discharging, and 10 cycles of charge and discharge experiments were carried out. The results are shown in Fig. 5.

### (Example 6)

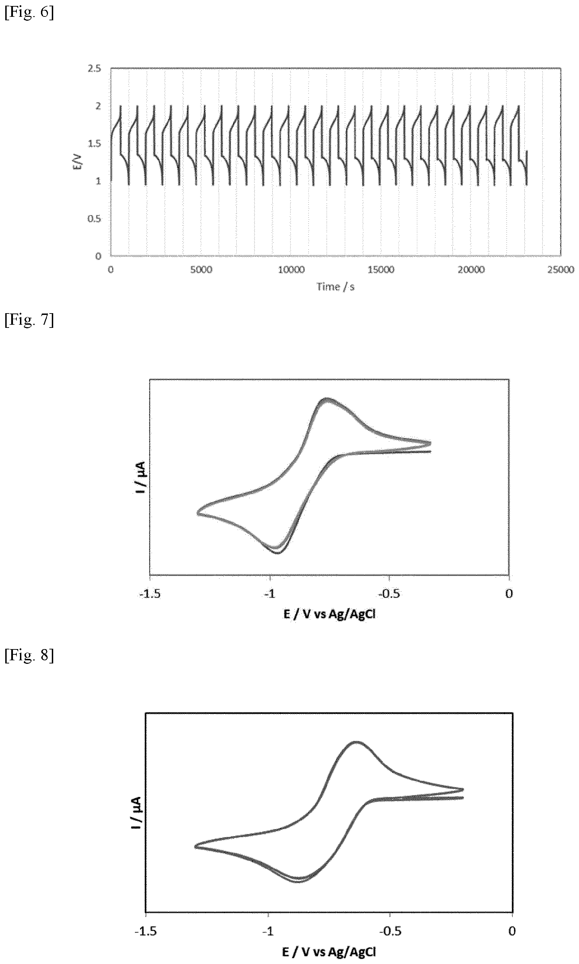

A charge and discharge experiment was performed in the same manner as in Example 5, except that 8 mL of the negative electrode electrolytic solution of Example 5 and 12 mL of the positive electrode electrolytic solution dissolved in 1 M potassium chloride aqueous solution so that the concentration of 4-hydroxy-TEMPO was 0.2 M were used, and the charge and discharge experiment was carried out for 25 cycles. The results are shown in Fig. 6.

The results of Examples 5 and 6 (Figs. 5 and 6) indicates that a liquid in which a highly concentrated organic active material is dissolved using the present invention is used as the electrolytic solution, thereby functioning as a redox flow battery.

### [Second Aspect]

### <Synthesis of Polycyclic Organic Compound and Salt thereof>

### Synthesis Example 5 (Synthesis of compounds represented by formulae (4a-1) and (4a-2) and salts represented by formulae (4-1) and (4-2))

To a glass vessel equipped with a stirrer, 4.44 g (25 mmol) of 2-hydroxy-1,4-naphthoquinone, 4.80 g (25 mmol) of 3,4-diaminobenzene sulfonate, and 250 mL of water were added, heated for 2 hours, and reacted at reflux. The reaction mixture was cooled to room temperature and then filtered under reduced pressure to give a red-brown wet cake. The wet cake was dried to yield 7.54 g of a red brown powder.

The red brown powder was dissolved in a D₂O solvent to which one drop of 1 M sodium hydroxide aqueous solution was added, and ¹H-NMR was measured to confirm that the powder was a mixture of compounds represented by formulae (4a-1) and (4a-2) (yield: 92.4%).

Next, 1 g (3.06 mmol) of the mixture of compounds represented by formulae (4a-1) and (4a-2) prepared above was suspended in 15 mL of methanol. A 1 M potassium hydroxide solution was added in a volume of 6.13 mL with stirring at room temperature, and the mixture was stirred until the compounds represented by formulae (4a-1) and (4a-2) were completely dissolved. Thereafter, the solution was concentrated and dried to give a mixture of compounds represented by formulae (4-1) and (4-2) (wherein M represents a potassium atom; hereinafter also referred to as "potassium salts represented by formulae (4-1) and (4-2)") as a polycyclic organic compound salt.

When 0.05 mmol of the mixture of the potassium salts represented by formulae (4-1) and (4-2) was added to 10 mL each of 1 M sodium chloride aqueous solution, 1 M potassium chloride aqueous solution, 1 M lithium chloride aqueous solution, and 1 M ammonium chloride aqueous solution at room temperature, the potassium salts represented by formulae (4-1) and (4-2) were completely dissolved in all the aqueous solutions.

On the other hand, 0.05 mmol of the mixture of the compounds represented by formulae (4a-1) and (4a-2) did not dissolve in any 10 mL of 1 M sodium chloride aqueous solution, 1 M potassium chloride aqueous solution, 1 M lithium chloride aqueous solution, and 1 M ammonium chloride aqueous solution.

When the pH of the solution of the potassium salts represented by formulae (4-1) and (4-2) was measured in the same manner as in Synthesis Example 1, the pH of the solution was 8.1.

### Synthesis Example 6 (Synthesis of compounds represented by formulae (4a-3) and (4a-4) and salts represented by formulae (4-3) and (4-4))

To a glass vessel equipped with a stirrer, 0.2881 g (1.5 mmol) of 2,7-dihydroxy-1,4-naphthoquinone, 0.30 g (1.5 mmol) of 3,4-diaminobenzene sulfonate, and 12 mL of water were added, heated for 2 hours, and reacted at reflux. The reaction mixture was cooled to room temperature and then filtered under reduced pressure to give a red-brown wet cake. The wet cake was dried to give a red brown powder.

The red brown powder was dissolved in a D₂O solvent to which one drop of 1 M sodium hydroxide aqueous solution was added, and ¹H-NMR was measured to confirm that the powder was a mixture of compounds represented by formulae (4a-3) and (4a-4).

Next, 0,1 g (0.29 mmol) of the compounds represented by formulae (4a-3) and (4a-4) prepared above was suspended in 5 mL of methanol. A 1 M potassium hydroxide solution was added in a volume of 0.6 mL with stirring at room temperature, and the mixture was stirred until the compounds represented by formulae (4a-3) and (4a-4) were completely dissolved. Thereafter, the solution was concentrated and dried to give compounds represented by formulae (4-3) and (4-4) (wherein M represents a potassium atom; hereinafter also referred to as "potassium salts represented by formulae (4-3) and (4-4)") as polycyclic organic compound salts.

When 0.05 mmol of the mixture of the potassium salts represented by formulae (4-3) and (4-4) was added to 10 mL each of 1 M sodium chloride aqueous solution, 1 M potassium chloride aqueous solution, 1 M lithium chloride aqueous solution, and 1 M ammonium chloride aqueous solution at room temperature, the potassium salts represented by formulae (4-1) and (4-4) were completely dissolved in all the aqueous solutions.

On the other hand, 0.05 mmol of the mixture of the compounds represented by formulae (4a-3) and (4a-4) did not dissolve in any 10 mL of 1 M sodium chloride aqueous solution, 1 M potassium chloride aqueous solution, 1 M lithium chloride aqueous solution, and 1 M ammonium chloride aqueous solution.

When the pH of the solution of the potassium salts represented by formulae (4-3) and (4-4) was measured in the same manner as in Synthesis Example 1, the pH of the solution was 9.4.

### <Electrochemical measurement of polycyclic organic compound salt>

### (Example 7)

The potassium salts represented by formulae (4-1) and (4-2) were dissolved in 1 M potassium chloride solution so that the concentration was 0.05 M to prepare an electrolytic solution. The solution was subjected to cyclic voltammetry measurements at a scanning rate of 50 mV/s using a carbon electrode (glassy carbon disk electrode, electrode area of 0.28 cm², manufactured by BAS Inc., model No. 002012) as a working electrode and a silver-silver chloride electrode (Ag/AgCl (saturated KCl, manufactured by BAS Inc., model No. RE-1CP) as a reference electrode, and a platinum wire (φ 0.5) as a counter electrode. The resulting cyclic voltammogram is shown in Fig. 7.

The redox potential differences with sodium ferrocyanide, 4-hydroxy-TEMPO, and FcNCl measured under the same conditions were 1.10 V, 1.37 V and 1.20 V, respectively.

### (Example 8)

Cyclic voltammetry measurements were performed in the same manner as in Example 7, except that the potassium salts represented by formulae (4-1) and (4-2) were changed to potassium salts represented by formulae (4-3) and (4-4). The resulting cyclic voltammogram is shown in Fig. 8.

The redox potential differences with sodium ferrocyanide, 4-hydroxy-TEMPO, and FcNCl measured under the same conditions were 1.04 V, 1.31 V and 1.14 V, respectively.

### (Example 9)

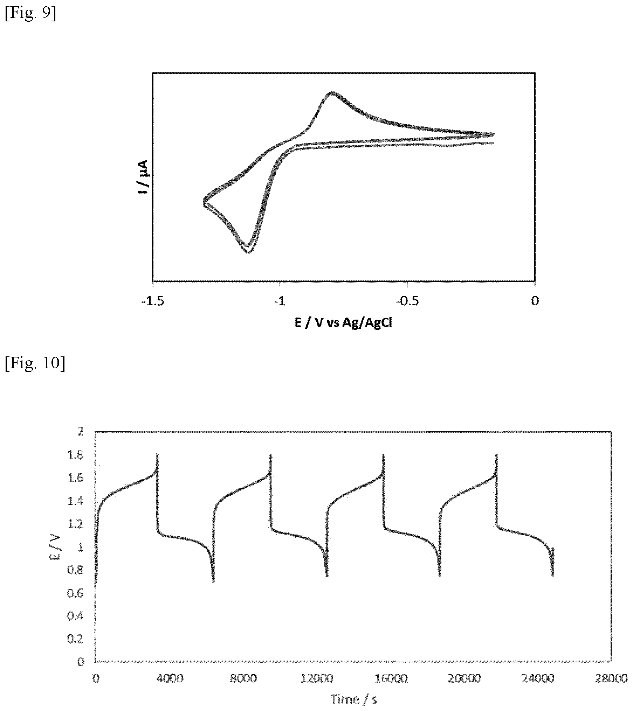

Cyclic voltammetry measurements were performed in the same manner as in Example 8, except that an electrolytic solution in which the potassium salts represented by the formulae (4-3) and (4-4) were dissolved in 1 M potassium hydroxide aqueous solution so that the concentration was 0.05 M was used. The resulting cyclic voltammogram is shown in Fig. 9.

The redox potential difference with sodium ferrocyanide measured under the same conditions was 1.24 V.

### <Measurement of thermal stability of polycyclic organic compound salt>

### (Example 10)

The salts represented by formulae (4-1) and (4-2) were dissolved in 10 mL of water so that the concentration was 0.1 M to give an aqueous solution of the salts represented by formulae (4-1) and (4-2). The aqueous solution was heated and stirred in a glass vessel equipped with a stirrer at 60°C for 4 hours. The aqueous solutions before and after heating were diluted and subjected to purity analysis by high performance liquid chromatography under measurement conditions below, provided that there was no change in purity before and after heating and stirring:
Instruments used: high performance liquid chromatograph (Prominence, manufactured by Shimadzu Corporation) and PDA detector (SPD-M40, manufactured by Shimadzu Corporation)
Column: reversed-phase column (L-column ODS, manufactured by Chemicals Evaluation and Research Institute, Japan)
Eluent: solution A prepared by dissolving 0.1 wt% trifluoroacetic acid in water; solution B prepared by dissolving 0.1 wt% trifluoroacetic acid in a solvent consisting of 50 vol% acetonitrile and 50 vol% isopropyl alcohol; eluent C consisting of 80 vol% of solution A and 20 vol% of solution B; and eluent D consisting of 0 vol% of solution A and 100 vol% of solution B.

Analysis was performed using eluent C at a retention time of 0 minutes or later and less than 12 minutes and eluent D at a retention time of 12 minutes and later.

Sample preparation method: A measurement sample was prepared by diluting the aqueous solution before and after heating with eluent D. The injection volume in a single analysis was 5 µL.

Other measurement conditions: Analysis was performed at an oven temperature of 40°C and a pump flow rate of 1 mL/min.

<Charge and discharge experiment>

### (Example 11)

A charge and discharge experiment was carried out in the same manner as in Example 5, except that 4.5 mL of the negative electrode electrolytic solution dissolved in 1 M potassium chloride aqueous solution was used so that the concentration of the mixture of potassium salts represented by formulae (4-1) and (4-2) was 1 M, 30 mL of the positive electrode electrolytic solution dissolved in 1 M potassium chloride aqueous solution was used so that the concentration of sodium ferrocyanide was 0.4 M, the separator was changed from an anion exchange membrane to a cation exchange membrane (7 cm × 2 cm in size and 0.05 mm in thickness), and the charge and discharge experiment was carried out for 4 cycles. The results are shown in Fig. 10.

The results of Examples 7 to 11 (Figs. 7 to 10) indicates that a liquid in which a highly concentrated organic active material is dissolved using the present invention is used as the electrolytic solution, thereby functioning as a redox flow battery. It was also found that the electrolytic solution of the present invention was excellent in thermal stability.

### Industrial Applicability

By using the aqueous electrolytic solution of the present invention as an electrolytic solution for a redox flow battery or the like, it is possible to drive the redox flow battery in the near-neutral pH range or to provide a redox flow battery that is excellent in thermal stability. Accordingly, the redox flow battery of the present invention can be used not only as an industrial rechargeable battery for storing electric power generated through photovoltaic power generation or wind power generation, but also as a household rechargeable battery.

## Claims

1. An aqueous electrolytic solution comprising at least one polycyclic organic compound salt selected from salts represented by general formulae (1) to (3), at least one selected from the group consisting of an alkali metal salt and an amine salt, and water, wherein the aqueous electrolytic solution has a pH of 6.5 to 12.5: 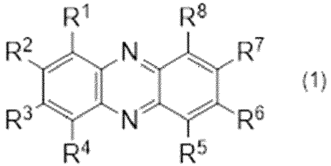
wherein R¹ to R⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
at least one of R¹ to R⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group; and
two adjacent groups of R¹ to R⁸ may be bonded to each other to form a non-aromatic ring, and
the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group, 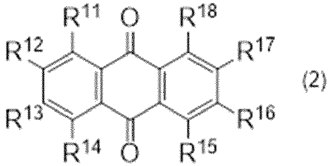
wherein R¹¹ to R¹⁸ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group;
at least one of R¹¹ to R¹⁸ represents a lithium salt, a sodium salt, a potassium salt, or an ammonium salt of a sulfonic acid group, a sulfonic acid group substituted with an alkyl group or an alkoxy group, a carboxy group, or a carboxy group substituted with an alkyl group or an alkoxy group; and
the alkyl group, the aryl group, the alkoxy group, the acyloxy group, the alkoxycarbonyl group, and the acyl group may be substituted with a halogen atom, a hydroxy group, an alkoxy group, an amino group, a carboxy group, and/or a sulfonic acid group, and 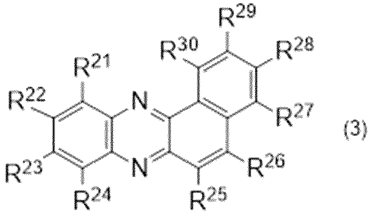
wherein R²¹ to R³⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a phosphonic acid group, and a phosphoric acid group, or a salt thereof;
at least one of R²¹ to R³⁰ represents a hydroxy group;
at least one of R²¹ to R³⁰ represents a lithium salt, a sodium salt, a potassium salt, or an ammonium salt of a carboxy group or a carboxy group substituted with an alkyl group or an alkoxy group; and
two adjacent groups of R²¹ to R³⁰ may be bonded to each other to form a ring, and
the alkyl group, the aryl group, the alkoxy group, the acyloxy group, the alkoxycarbonyl group, and the acyl group may be substituted with a halogen atom, a hydroxy group, an alkoxy group, an amino group, and/or a carboxy group.

2. The aqueous electrolytic solution according to claim 1, wherein the polycyclic organic compound salt is a salt represented by general formula (1), and at least one of R¹ to R⁸ is a lithium salt, a sodium salt, a potassium salt, or an ammonium salt of a hydroxy group.

3. The aqueous electrolytic solution according to claim 2, wherein the salt represented by general formula (1) is a salt represented by any one of the following formulae (1-1) to (1-9): 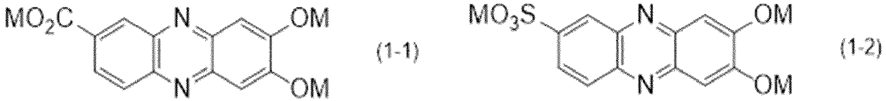 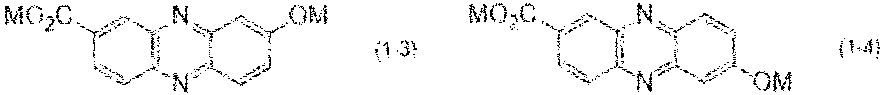 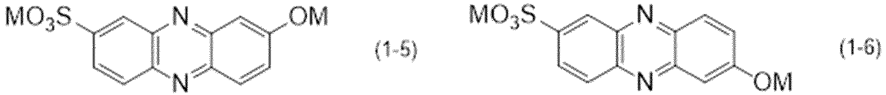 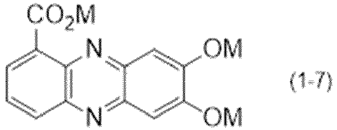 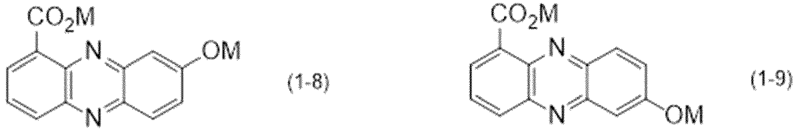 wherein M is each independently selected from the group consisting of a lithium atom, a potassium atom, a sodium atom, and ammonium.

4. The aqueous electrolytic solution according to claim 1, wherein the polycyclic organic compound salt is a salt represented by general formula (2), and at least one of R¹¹ to R¹⁸ is a lithium salt, a sodium salt, a potassium salt, or an ammonium salt of a hydroxy group.

5. The aqueous electrolytic solution according to claim 4, wherein in the general formula (2), at least two of R¹¹ to R¹⁸ each independently represent a lithium salt, a sodium salt, a potassium salt, or an ammonium salt of a hydroxy group.

6. The aqueous electrolytic solution according to claim 5, wherein the salt represented by general formula (2) is a compound represented by any one of the following formulae (2-1) to (2-7): 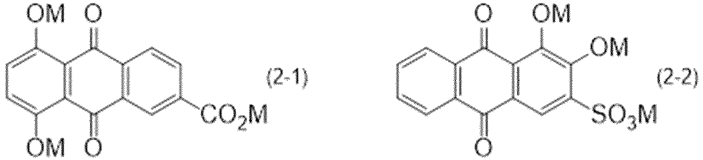 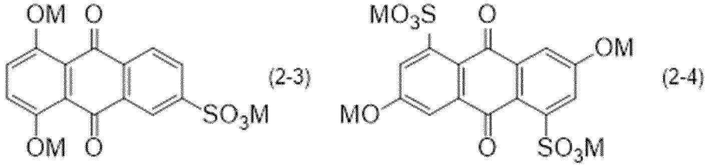 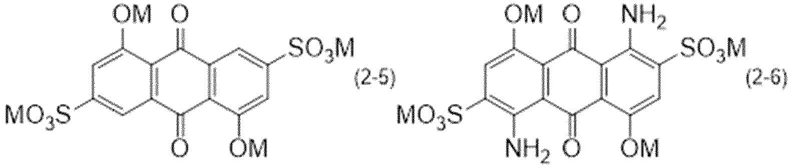 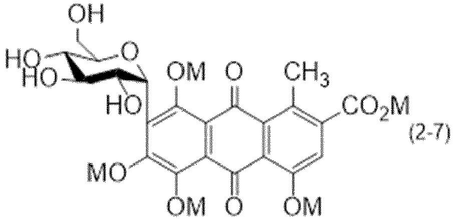 wherein M is each independently selected from the group consisting of a lithium atom, a potassium atom, a sodium atom, and ammonium.

7. The aqueous electrolytic solution according to claim 1, wherein the polycyclic organic compound salt is a salt represented by general formula (3), and at least one of R²¹ to R³⁰ is a lithium salt, a sodium salt, a potassium salt, or an ammonium salt of a hydroxy group.

8. The aqueous electrolytic solution according to claim 7, wherein the salt represented by general formula (3) is a compound represented by any one of the following formulae (3-1) to (3-4): 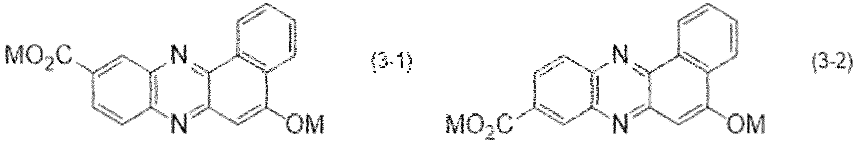 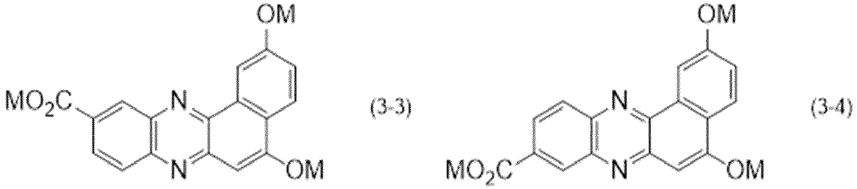 wherein M is each independently selected from the group consisting of a lithium atom, a potassium atom, a sodium atom, and ammonium.

9. The aqueous electrolytic solution according to any one of claims 1 to 8, wherein the aqueous electrolytic solution comprises an alkali metal salt, and the alkali metal salt is potassium chloride.

10. A redox flow battery comprising an aqueous electrolytic solution, a positive electrode, a negative electrode, and a separator, wherein
the aqueous electrolytic solution comprises the aqueous electrolytic solution according to any one of claims 1 to 9, and
the aqueous electrolytic solution is a negative electrode electrolytic solution.

11. The redox flow battery according to claim 10, wherein a difference in redox potential between an active material comprised in a positive electrode electrolytic solution and the polycyclic organic compound salt is 1.0 V or more.

12. The redox flow battery according to claim 11, comprising, as the active material comprised in the positive electrode electrolytic solution, at least one compound selected from the group consisting of a compound having a nitroxyl radical structure and a compound having a ferrocene structure.

13. The redox flow battery according to claim 11 or 12, wherein the separator is an anion exchange membrane.

14. A salt represented by general formula (4): 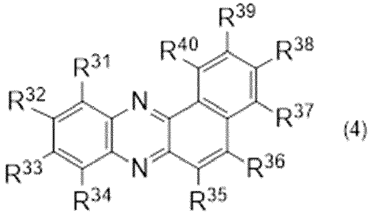
wherein R³¹ to R⁴⁰ each independently represent a hydrogen atom, a halogen atom, an alkyl group, an aryl group, a hydroxy group, an alkoxy group, an acyloxy group, a carboxy group, an alkoxycarbonyl group, an acyl group, an amino group, an amide group, a nitrile group, a thiol group, a sulfonic acid group, a sulfuric acid group, a phosphonic acid group, and a phosphoric acid group, or a salt thereof;
at least one of R³¹ to R⁴⁰ represents a hydroxy group;
at least one of R³¹ to R⁴⁰ represents a lithium salt, a sodium salt, a potassium salt, or an ammonium salt of a sulfonic acid group, a sulfonic acid group substituted with an alkyl group or an alkoxy group, a sulfuric acid group, or a sulfuric acid group substituted with an alkyl group or an alkoxy group; and
two adjacent groups of R³¹ to R⁴⁰ are optionally bonded to each other to form a ring, and
the alkyl group, the aryl group, the alkoxy group, the acyloxy group, the alkoxycarbonyl group, and the acyl group are optionally substituted with a halogen atom, a hydroxy group, an alkoxy group, an amino group, a carboxy group, and/or a sulfonic acid group.

15. The salt according to claim 14, wherein the salt represented by general formula (4) is a salt represented by any one of the following formulae (4-1) to (4-6): 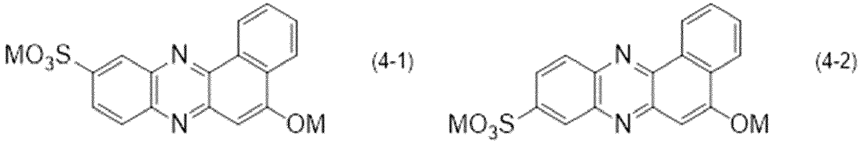 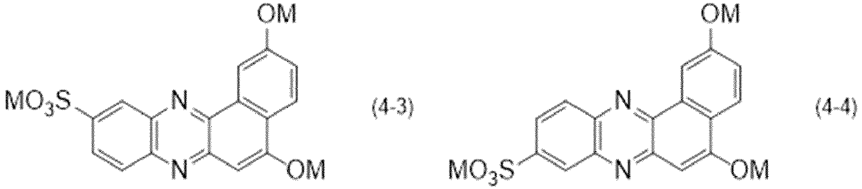 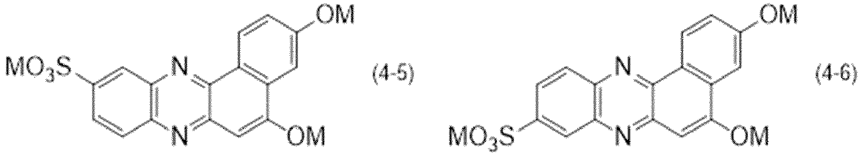 wherein M is each independently selected from the group consisting of a lithium atom, a potassium atom, a sodium atom, and ammonium.

16. An aqueous electrolytic solution comprising the salt according to claim 14 or 15.

17. A redox flow battery comprising an aqueous electrolytic solution, a positive electrode, a negative electrode, and a separator,
wherein the aqueous electrolytic solution comprises the aqueous electrolytic solution according to claim 16.
